# EUROPÄISCHE PATENTANMELDUNG

(11) **EP 3 296 579 A1**
(43) Veröffentlichungstag der Anmeldung: **21.03.2018**
(21) Anmeldenummer: 17191456.7
(22) Anmeldetag: 15.09.2017
(51) Int. Cl.: F16C 1/10, E05B 79/20, E05B 85/02

(54) **BOWDENZUGABDICHTUNG FÜR SCHLOSSMODUL**

(30) Priorität: 15.09.2016 DE 102016117435
(71) Anmelder: Brose Schliesssysteme GmbH & Co. KG, 42369 Wuppertal (DE)
(72) Erfinder: Häger, Ole, 42369 Wuppertal (DE); Faust, Rene, 46282 Dorsten (DE)
(74) Vertreter: LKGLOBAL Lorenz & Kopf PartG mbB Patentanwälte

(57) **Zusammenfassung**

Die vorliegende Erfindung befasst sich mit einem Kraftfahrzeug-Verstellmodul und einer Kraftfahrzeug-Verstellanordnung sowie einem Verfahren zur Herstellung einer Abdichtung eines Kraftfahrzeug-Verstellmoduls. Um eine Abdichtung zur Verfügung zu stellen, die möglichst einfach angefertigt und eingebaut werden kann und kostengünstig ist, ist ein Kraftfahrzeug-Verstellmodul (10) zur Betätigung einer verstellbaren Fahrzeugkomponente vorgesehen, das ein Verstellelement und einen Bowdenzug (12) mit einer Bowdenzughülle (14) und einer Seele (16) aufweist, die in der Bowdenzughülle zur Übertragung einer Verstellkraft beweglich geführt ist. Die Seele ist an einem ersten Ende mit dem Verstellelement verbunden ist. Die Bowdenzughülle ist wenigstens an einem ersten Ende (18) in einem Endstück aufnehmbar. Außerdem ist eine einstückige Abdichtung (20) vorgesehen, die in einem ersten Bereich (22) das erste Ende der Bowdenzughülle umschließt, und die sich in einem zweiten Bereich (24) über einen aus der Bowdenzughülle austretenden Bereich der Seele erstreckt und an der Seele abdichtend anliegt. Die Abdichtung ist ausgebildet, um in einem in einem Endstück aufgenommenen Zustand in dem ersten Bereich von einem Endstück an die Bowdenzughülle angedrückt zu werden.

## Beschreibung

### GEBIET DER ERFINDUNG

Die vorliegende Erfindung befasst sich mit einem Kraftfahrzeug-Verstellmodul und einer Kraftfahrzeug-Verstellanordnung sowie einem Verfahren zur Herstellung einer Abdichtung eines Kraftfahrzeug-Verstellmoduls.

### HINTERGRUND DER ERFINDUNG

Kraftfahrzeug-Verstellmodule werden zum Beispiel bei Fahrzeugtüren verwendet, um z.B. ein Türschloss zu betätigen, zum Beispiel zu verriegeln oder zu entriegeln. Zur Übertragung einer Betätigungskraft wird bei einem Kraftfahrzeug-Verstellmodul zum Beispiel ein Bowdenzug verwendet, der von einem Punkt ausgehend, an dem die Betätigungskraft aufgebracht wird, zu einem Verstellelement verläuft, zum Beispiel einer Schlossvorrichtung. Jedoch kommt es auch bei Bowdenzügen, die etwa in einer Fahrzeugtür verlaufen, zu Verschmutzungen und Wassereintrag in das Innere des Bowdenzugs. Dies kann zum Beispiel zu einer Erhöhung der Reibung der Seele in der Bowdenzughülle führen. Schmutz und Wasser dringen beispielsweise an den Enden der Bowdenzughülle ein, an denen die Seele aus der Hülle austritt und sich dort im Verhältnis zur Bowdenzughülle bewegt. Um die Verschmutzung im Inneren und das Eindringen von Feuchtigkeit zu verhindern oder zumindest zu verringern, werden Dichtungen verwendet. Beispielsweise beschreibt DE 10 2011 110 975 A1 eine balgenförmige Dichtung, die sich von dem Ende der Bowdenzughülle über einen Teil der freiliegenden Seele erstreckt. Es hat sich jedoch gezeigt, dass balgenförmige Dichtungen relativ aufwendig in der Fertigung sind.

### ZUSAMMENFASSUNG DER ERFINDUNG

Eine Aufgabe der vorliegenden Erfindung besteht daher darin, eine Abdichtung für ein Kraftfahrzeug-Verstellmodul zur Verfügung zu stellen, die möglichst einfach angefertigt und eingebaut werden kann und dabei auch noch kostengünstig ist.

Diese Aufgabe wird durch ein Kraftfahrzeug-Verstellmodul, durch eine Kraftfahrzeug-Verstellanordnung und durch ein Verfahren zur Herstellung einer Abdichtung eines Kraftfahrzeug-Verstellmoduls nach einem der unabhängigen Ansprüche erreicht. Beispielhafte Ausführungsformen sind in den Unteransprüchen angegeben.

Gemäß der Erfindung ist ein Kraftfahrzeug-Verstellmodul zur Betätigung einer verstellbaren Fahrzeugkomponente vorgesehen. Das Kraftfahrzeug-Verstellmodul weist ein Verstellelement und einen Bowdenzug mit einer Bowdenzughülle und einer Seele auf, die in der Bowdenzughülle zur Übertragung einer Verstellkraft beweglich geführt ist. Die Seele ist an einem ersten Ende mit dem Verstellelement verbunden. Die Bowdenzughülle ist wenigstens an einem ersten Ende in einem Endstück aufnehmbar. Außerdem ist eine einstückige Abdichtung vorgesehen, die in einem ersten Bereich das erste Ende der Bowdenzughülle umschließt, und die sich in einem zweiten Bereich über einen aus der Bowdenzughülle austretenden Bereich der Seele erstreckt und an der Seele abdichtend anliegt. Die Abdichtung ist ausgebildet, um in einem in einem Endstück aufgenommenen Zustand in dem ersten Bereich von einem Endstück an die Bowdenzughülle angedrückt zu werden.

Dadurch wird eine vom Aufbau her einfache und kostengünstig zu fertigende Abdichtung eines Kraftfahrzeug-Verstellmoduls ermöglicht. Das Anordnen der Abdichtung zwischen der Bowdenzughülle und dem Endstück gewährleistet zudem eine einfache aber zuverlässige Abdichtung.

Der Bowdenzug kann auch als Verstellmittel bezeichnet werden.

Der Begriff "abdichtend anliegt" bezieht sich auf eine Ausbildung, bei der die Seele frei bewegbar ist und wobei gleichzeitig ein Eindringen von Feuchtigkeit und Schmutz verhindert oder verringert wird. Dies kann in der Regel dadurch erfolgen, dass die Abdichtung tatsächlich an der Seele anliegt und diese berührt; dies kann zumindest theoretisch aber auch dadurch erfolgen, dass zwischen der Abdichtung und der Seele ein minimaler Spalt vorgesehen ist.

Das Verstellelement ist zum Beispiel ein Öffnungs-, oder Verriegelungselement für eine bewegliche Fahrzeugkomponente, z.B. ein Schlossmodul für eine Kraftfahrzeugtür. Der Begriff Kraftfahrzeugtür bezieht sich dabei auf Türen, Klappen oder sonstige bewegliche Elemente an einem Fahrzeug, mit denen Öffnungen verschlossen und zugänglich gemacht werden. Dies umfasst insbesondere schwenkbare Fahrzeugtüren, Schiebetüren eines Fahrzeugs, Hecktüren und Heckklappen sowie auch andere Klappen, z.B. auch Tankklappen.

Das Verstellelement ist zum Beispiel ein Stellelement für eine Fahrzeugkomponente, z.B. eine Bremse, wie beispielsweise eine Parkbremse.

Das Verstellelement ist zum Beispiel ein Ansteuerelement für eine Regelungskomponente ist, z.B. ein Seilzug für eine Drosselklappe zur Motorsteuerung.

In einem Beispiel ist die Seele als Zugelement, z.B. in Form eines Stahlseils ausgebildet. Das Seil kann auch aus anderem Material bestehen, z.B. Fasern aus Kunststoff, oder z.B. auch aus Kohle- oder Aramidfasern.

Die Seele besteht zum Beispiel aus mehreren Stahl-Litzen und ist beispielweise mit einer Beschichtung beschichtet.

In einem weiteren Beispiel ist die Seele als Zug- und Druckelement ausgebildet. Die Seele besteht z.B. aus einem Federstahldraht, der in gewissem Maß elastisch biegbar ist und sich für die Führung in einer Bowdenzughülle eignet, die gekrümmt verlaufend eingebaut werden kann.

Die Seele ist zum Beispiel an einem Ende oder beiden Enden mit einem Seelenendstück ausgestattet. Beispielsweise ist als Seeelenendstück ein Anschlussstück vorgesehen, das in eine Aufhängung eingehängt werden kann, um Kraft zu übertragen. Das Anschlussstück ist z.B. eine Tonne, eine Kugel oder ein Haken oder eine Öse, die auf das Ende der Seele, z.B. das Seilende, aufgegossen, aufgepresst oder aufgequetscht ist.

In einem Beispiel ist die Bowdenzughülle an beiden Enden jeweils mit einer einstückigen Abdichtung ausgebildet und in einem Endstück aufnehmbar.

Die Abdichtung kann im Bereich, an dem sie an der Seele anliegt, mit einem Dichtungssegment ausgebildet sein, beispielsweise in Form einer einstückig ausgebildeten Dichtungswulst oder Dichtungslippe. Die Dichtungslippe kann zwei- oder dreilippig ausgebildet sein.

In einem Beispiel ist vorgesehen, dass des Verstellelement an dem Bowdenzug (noch) nicht befestigt ist, sondern dass der Bowdenzug ausgebildet ist, um ein Verstellelement daran zu befestigen, d.h. um die Seele mit einem Verstellelement zu verbinden: Ein Bowdenzug (Verstellmittel) zur Betätigung einer verstellbaren Fahrzeugkomponente ist vorgesehen, der eine Bowdenzughülle und eine Seele aufweist, die in der Bowdenzughülle zur Übertragung einer Verstellkraft an ein Verstellelement beweglich geführt ist. Die Seele ist mit dem Verstellelement verbindbar. Die Bowdenzughülle ist wenigstens an einem Ende in einem Endstück aufnehmbar. Eine einstückige Abdichtung ist vorgesehen, die in einem ersten Bereich das wenigstens eine Ende der Bowdenzughülle umschließt, und die sich in einem zweiten Bereich über einen aus der Bowdenzughülle austretenden Bereich der Seele erstreckt und an der Seele abdichtend anliegt. Die Abdichtung ist ausgebildet, um in einem in einem Endstück aufgenommenen Zustand in dem ersten Bereich von einem Endstück an die Bowdenzughülle angedrückt zu werden.

In einem Beispiel ist vorgesehen, dass der Bowdenzug bereits mit einem Endstück ausgebildet ist: Ein Bowdenzug zur Betätigung einer verstellbaren Fahrzeugkomponente ist vorgesehen, der eine Bowdenzughülle und eine Seele aufweist, die in der Bowdenzughülle zur Übertragung einer Verstellkraft an ein Verstellelement beweglich geführt ist. Die Seele ist mit dem Verstellelement verbindbar. Die Bowdenzughülle ist wenigstens an einem Ende in einem Endstück aufgenommen. Eine einstückige Abdichtung ist vorgesehen, die in einem ersten Bereich das wenigstens eine Ende der Bowdenzughülle umschließt, und die sich in einem zweiten Bereich über einen aus der Bowdenzughülle austretenden Bereich der Seele erstreckt und an der Seele abdichtend anliegt. Die Abdichtung wird in dem ersten Bereich von einer Innenwand einer Aufnahme des Endstücks an die Bowdenzughülle angedrückt.

Gemäß einem Beispiel ist die Abdichtung ausgebildet, um sich in dem aufgenommenen Zustand in dem zweiten Bereich wenigstens bis in eine Öffnung des Endstücks zu erstrecken, aus der die Seele austritt, und vorzugsweise von dem Öffnungsrand gegen die Seele gedrückt zu werden.

Das Andrücken der Abdichtung gegen die Seele erfolgt dabei gerade so weit, dass kein Wasser und Verschmutzung dazwischen eindringen kann, und sich die Seele gleichzeitig mit möglichst wenig Reibungswiderstand bewegen lässt.

Gemäß einem Beispiel ist ein Endstück vorgesehen mit einer Aufnahme für das wenigstens eine Ende der Bowdenzughülle, um die Bowdenzughülle in Längsrichtung abzustützen, und einer Öffnung, aus der die Seele austritt. Die Abdichtung ist in dem ersten Bereich von der Aufnahme an die Bowdenzughülle angedrückt, und erstreckt sich zum Beispiel bis in die Öffnung.

In einem Beispiel wird die Abdichtung in dem ersten Bereich von der Aufnahme über den Umfang verteilt an die Bowdenzughülle angedrückt, z.B. an zwei Stellen, drei Stellen oder mehr Stellen. Das Andrücken erfolgt beispielsweise gleichmäßig verteilt.

In einem Beispiel wird die Abdichtung in dem ersten Bereich von der Aufnahme über den Umfang verteilt diskontinuierlich an die Bowdenzughülle angedrückt, z.B. an mehreren Stellen punktförmig, d.h. umlaufend diskontinuierlich, beispielsweise durch Crimpen.

In einem Beispiel wird die Abdichtung in dem ersten Bereich von der Aufnahme über den Umfang verteilt kontinuierlich an die Bowdenzughülle angedrückt, d.h. umlaufend kontinuierlich.

In einem Beispiel erstreckt sich die Abdichtung bis zu einem äußeren Rand der Öffnung und schließt z.B. bündig mit dem Endstück ab.

Das Endstück hat z.B. eine Aufnahmeöffnung zum Einführen des Endes der Bowdenzughülle. Dabei kann ein in Längsrichtung verlaufender Schlitz vorgesehen sein, um die Seele seitlich einzuführen. Der Schlitz kann anschließend verriegelt werden, z.B. in Form einer drehbar gehaltenen Hülse, die ebenfalls einen Schlitz aufweist zum Einsetzen der Seele.

Gemäß einem Beispiel liegt die Abdichtung in dem ersten Bereich an der Außenseite der Bowdenzughülle abdichtend an; in dem zweiten Bereich liegt die Abdichtung an der Außenseite der Seele abdichtend an. Zwischen dem ersten Bereich und dem zweiten Bereich ist ein Übergangsbereich vorgesehen ist, der an dem Ende des Bowdenzugs zusammen mit dem ersten und dem zweiten Bereich eine wirksame Abdichtung des Inneren des Bowdenzugs bildet.

In einem Beispiel bildet der erste Bereich eine feste Abdichtung und der zweite Bereich bildet eine (in Relation zur Seele) bewegliche Abdichtung.

Der Übergangsbereich bildet zusammen mit dem ersten und dem zweiten Bereich eine wirksame Abdichtung der Bowdenzughülle.

Die einstückige Abdichtung ist an dem ersten Ende zwischen (der Außenseite) der Bowdenzughülle und dem Endstück angeordnet und kann somit durch das Endstück an die Bowdenzughülle abdichtend angedrückt werden. An dem zweiten Ende ist die einstückige Abdichtung zwischen (der Außenseite) der Seele und der Öffnung für die Seele in dem Endstück angeordnet und kann somit durch den Öffnungsrand des Endstücks an die Seele abdichtend angedrückt werden.

Die Abdichtung ist zwischen den abzudichtenden Teilen und dem Endstück angeordnet.

Die einstückige Ausbildung der Abdichtung mit den beiden verschiedenen Abdichtungsbereichen und dem verbindenden Übergangsbereich ermöglicht ein einfaches Montageverfahren. Durch das Anordnen zwischen dem Endstück und den Bowdenzug-Elementen (Hülle und Seele) wird ein abdichtendes Anliegen ermöglicht, das sich durch einen einfachen Füge- bzw. Montagevorgang auszeichnet. Beispielsweise erlaubt eine Vercrimpung einen sehr einfachen und schnellen Zusammenbau.

Das Endstück kann mit Rast- oder Fügenuten ausgebildet sein, um an einer Halterung eingesetzt und gehalten zu werden. Beispielsweise kann das Endstück an einem Verstellelement gehalten sein, z.B. an einem Fahrzeugschloss.

Gemäß einem Beispiel ist das Endstück mit der Bowdenzughülle mechanisch fest verbunden.

Die mechanisch feste Verbindung ist vorgesehen, um über die Verbindung auch Zugkräfte zu übertragen, z.B. Abzugskräfte für den Fall, dass an der Bowdenzughülle gezogen wird. Die mechanisch feste Verbindung kann beispielsweise für Abzugskräfte im Bereich von ca. 50 bis 150 N vorgesehen sein. Beispielswiese ist eine mechanisch feste Verbindung durch eine Crimpverbindung vorgesehen. Die mechanisch feste Verbindung kann auch durch Aufspritzen, einen Metall- oder Kunststoffring oder eine Presspassung vorgesehen sein. Eine mechanisch feste Verbindung ist auch durch ein Aufschieben, Verkleben oder Verschweißen vorgesehen.

Die mechanisch feste Verbindung kann für die Abstützung der Bowdenzughülle vorgesehen sein. Das Abstützen kann auch über die Stirnfläche der Bowdenzughülle an das Endstück erfolgen.

Zum Beispiel können in der Aufnahme des Endstücks mehrere, z.B. drei oder mehr, Vorsprünge vorgesehen sein, damit die Stirnfläche der Bowdenzughülle an diesen anliegen kann. Zwischen den Vorsprüngen können Bereich ausgebildet sein, in denen sich die Dichtung erstreckt und einen Übergang ausbildet zwischen dem außen an der Bowdenzughülle anliegenden Bereich der Abdichtung und dem an der Seele anliegenden Bereich der Abdichtung.

Gemäß einem Beispiel ist das Endstück an einem Gehäuse eines Verstellelements vorgesehen.

Das Endstück ist z.B. Teil des Gehäuses des Verstellelements. In einem Beispiel ist das Endstück einstückig an dem Gehäuse des Verstellelements ausgebildet.

Gemäß der Erfindung ist auch eine Kraftfahrzeug-Verstellanordnung vorgesehen, die ein Betätigungselement zum Erzeugen einer Verstellkraft und ein Kraftfahrzeug-Verstellmodul nach einem der vorhergehenden Beispiele aufweist. Die Seele ist an einem zweiten Ende mit dem Betätigungselement verbunden. Die Verstellkraft ist über die Seele auf das Verstellelement aufgebracht.

Das Betätigungselement ist beispielsweise ein Griff, Hebel oder Aktuator, um die Verstellkraft zu erzeugen bzw. aufzubringen.

Gemäß der Erfindung ist auch ein Verfahren zur Herstellung einer Abdichtung eines Kraftfahrzeug-Verstellmoduls vorgesehen. Das Verfahren weist folgende Schritte auf:
a) Vorsehen eines Bowdenzugs mit einer Bowdenzughülle und einer Seele, die in der Bowdenzughülle zur Übertragung einer Verstellkraft beweglich geführt ist; und
b) Anbringen einer einstückigen Abdichtung derart, dass die Abdichtung in einem ersten Bereich ein Ende der Bowdenzughülle umschließt, und sich in einem zweiten Bereich über einen aus der Bowdenzughülle austretenden Bereich der Seele erstreckt und an der Seele abdichtend anliegt; wobei die Abdichtung ausgebildet ist, um in aufgenommenem Zustand in dem ersten Bereich von einem Endstück an die Bowdenzughülle angedrückt zu werden.

Gemäß einem Beispiel ist außerdem vorgesehen:
c) Einführen des Endes der Bowdenzughülle in eine Aufnahme eines Endstücks, das eine Öffnung aufweist, aus dem die Seele austritt; wobei die Abdichtung zwischen der Bowdenzughülle und der inneren Wandung der Aufnahme angeordnet wird und sich die Abdichtung vorzugsweise bis in die Öffnung erstreckt.

Gemäß einem Beispiel ist vorgesehen, dass in Schritt a) die Seele mit wenigstens einem Seelenendstück durch die Öffnung eines Endstücks geführt wird, wobei die Seele bereits in der Bowdenzughülle angeordnet ist, und vorzugsweise mit zwei Seelenendstücken ausgebildet ist. Außerdem ist vorgesehen, dass in Schritt b) die Abdichtung in die Aufnahme des Endstücks eingesetzt wird; und in Schritt c) werden die Bowdenzughülle und die Abdichtung in die Aufnahme eingeführt.

Gemäß einem Beispiel ist vorgesehen, dass in Schritt b) die Abdichtung auf die Bowdenzughülle aufgeschoben wird, wobei die Seele, die wenigstens an einem Ende ein Seelenendstück aufweist, vorzugsweise an jedem Ende ein Seelenendstück, bereits in der Bowdenzughülle verläuft. Außerdem ist vorgesehen, dass in Schritt c) die Seele nach dem Aufsetzen der Abdichtung mit einem Seelenendstück durch die Öffnung des Endstücks geschoben wird; und dann oder auch gleichzeitig die Bowdenzughülle mit der auf dem Ende aufgesetzten Abdichtung in die Aufnahme des Endstücks eingeführt wird.

In einem Beispiel ist vorgesehen:
d) Andrücken des Randes der Aufnahme an die Abdichtung.

Zum Beispiel erfolgt eine mechanische Verbindung durch ein Vercrimpen oder Zusammendrücken.

In einem weiteren Beispiel ist vorgesehen, dass in Schritt d) ein festes Verbinden des Endstücks mit der Bowdenzughülle erfolgt, z.B. durch Aufcrimpen (Aufbringen durch Crimpen), Verklemmen, Verschweißen, Verkleben etc.

In einem Beispiel ist vorgesehen, dass die Abdichtung auf das Ende der Abdichtung aufgeschoben wird und dann die Seele eingeführt wird.

In einem Beispiel ist vorgesehen, dass die Seele bereits beim Anbringen der Abdichtung mit dem Verstellelement verbunden ist.

In einem anderen Beispiel ist vorgesehen, dass die Seele nach dem Anbringen der Abdichtung mit dem Verstellelement verbunden wird.

Gemäß einem Aspekt der Erfindung ist vorgesehen, dass eine Dichtung zur Abdichtung zwischen die Bowdenzughülle und eine Aufnahme eines Endstücks eingesetzt und dort zur besseren Abdichtung an die Bowdenzughülle angedrückt wird. Das Endstück dient dann nicht nur zur Abstützung der Bowdenzughülle, sondern auch gleichzeitig zum Andrücken der Dichtung an die Bowdenzughülle. Die Dichtung erstreckt sich von der Bowdenzughülle bis über die Seele, die aus der Bowdenzughülle austritt. Durch die Anordnung der Dichtung in dem Bereich der Öffnung des Endstücks, aus der die Seele austritt, dient der Öffnungsrand nicht nur zum Austritt der Seele, sondern auch gleichzeitig zum Anliegen der Dichtung an die sich bei Betätigung des Bowdenzugs in Längsrichtung bewegende Seele.

Es sei darauf hingewiesen, dass die Merkmale der Ausführungsbeispiele des Kraftfahrzeug-Verstellmoduls auch für Ausführungsformen der Kraftfahrzeug-Verstellanordnung und das Verfahren zur Herstellung einer Abdichtung eines Kraftfahrzeug-Verstellmoduls gelten und umgekehrt. Außerdem können auch diejenigen Merkmale frei miteinander kombiniert werden, bei denen dies nicht explizit erwähnt ist.

### KURZE BESCHREIBUNG DER ZEICHNUNGEN

Nachfolgend wird anhand der beigefügten Zeichnungen näher auf Ausführungsbeispiele der Erfindung eingegangen.

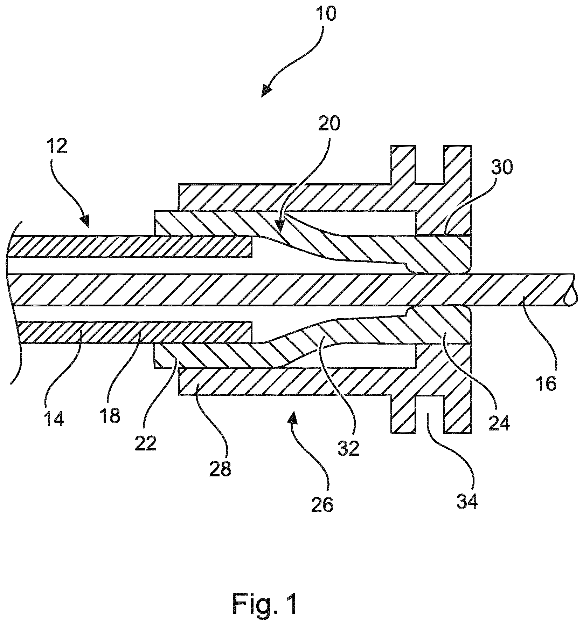

- Fig. 1: zeigt einen schematischen Längsschnitt durch ein Kraftfahrzeug-Verstellmodul in einem Ausschnitt.

### DETAILLIERTE BESCHREIBUNG VON AUSFÜHRUNGSFORMEN

Fig. 1 zeigt ein Kraftfahrzeug-Verstellmodul 10 zur Betätigung einer verstellbaren Fahrzeugkomponente (nicht dargestellt). Das Kraftfahrzeug-Verstellmodul 10 weist ein Verstellelement (nicht gezeigt) und einen Bowdenzug 12 mit einer Bowdenzughülle 14 und einer Seele 16 auf, die in der Bowdenzughülle 14 zur Übertragung einer Verstellkraft beweglich geführt ist. Die Seele 16 ist an einem ersten Ende mit dem Verstellelement verbunden (nicht näher gezeigt). Die Bowdenzughülle 14 kann wenigstens an einem ersten Ende 18 in einem Endstück aufgenommen werden. (In Fig. 1 ist bereits der aufgenommene Zustand gezeigt). Außerdem ist eine einstückige Abdichtung 20 vorgesehen, die in einem ersten Bereich 22 das erste Ende der Bowdenzughülle 14 umschließt, und die sich in einem zweiten Bereich 24 über einen aus der Bowdenzughülle 14 austretenden Bereich der Seele 16 erstreckt und an der Seele 16 abdichtend anliegt. Die Abdichtung 20 ist dabei ausgebildet, um in einem in einem Endstück aufgenommenen Zustand in dem ersten Bereich 22 von dem Endstück an die Bowdenzughülle 18 angedrückt zu werden.

In einem Beispiel ist vorgesehen, dass die Abdichtung 20 ausgebildet ist, um sich in dem aufgenommenen Zustand in dem zweiten Bereich wenigstens bis in eine Öffnung des Endstücks zu erstrecken (in Fig. 1 als Option bereits gezeigt), aus der die Seele 16 austritt, und vorzugsweise von dem Öffnungsrand gegen die Seele gedrückt zu werden.

In einem Beispiel ist, wie in Fig. 1 als Option dargestellt, ein Endstück 26 vorgesehen mit einer Aufnahme 28 für das wenigstens eine Ende 18 der Bowdenzughülle, um die Bowdenzughülle 14 in Längsrichtung (also in Richtung der Seele) abzustützen. Außerdem ist eine Öffnung 30 vorgesehen, aus der die Seele 16 austritt. Die Abdichtung 20 wird in dem ersten Bereich von der Aufnahme 26 an die Bowdenzughülle 14 angedrückt. Außerdem erstreckt sich die Abdichtung 20 in einem Beispiel bis in die Öffnung, und endet beispielsweise bündig; in einem nicht gezeigten Beispiel erstreckt sich die Abdichtung 20 nur bis kurz vor die Öffnung; in einem weiteren, ebenfalls nicht gezeigten Beispiel erstreckt sich die Abdichtung 20 bis über die Öffnung hinaus.

Die Abdichtung 20 liegt in dem ersten Bereich an der Außenseite der Bowdenzughülle 14 abdichtend an und liegt in dem zweiten Bereich an der Außenseite der Seele 15 abdichtend an. In einem Beispiel ist zwischen dem ersten Bereich und dem zweiten Bereich ein Übergangsbereich 32 vorgesehen, der an dem Ende der Bowdenzughülle zusammen mit dem ersten und dem zweiten Bereich eine wirksame Abdichtung des Inneren des Bowdenzugs bildet.

In einem Beispiel (nicht näher gezeigt) ist das Endstück 26 mit der Bowdenzughülle 14 mechanisch fest verbunden.

In einer weiteren Option ist vorgesehen, dass das Endstück 26 an einem Gehäuse (nicht gezeigt) eines Verstellelements vorgesehen ist.

Außerdem ist eine Kraftfahrzeug-Verstellanordnung vorgesehen (nicht im Detail gezeigt), die ein Betätigungselement zum Erzeugen einer Verstellkraft und ein Kraftfahrzeug-Verstellmodul 10 nach einem der vorhergehenden Beispiele und Optionen aufweist. Die Seele 16 ist an einem zweiten Ende mit dem Betätigungselement verbunden, z.B. einem Griff, und die Verstellkraft wird über die Seele 16 auf das Verstellelement aufgebracht.

Außerdem ist ein Verfahren zur Herstellung einer Abdichtung eines Kraftfahrzeug-Verstellmoduls vorgesehen (nicht näher gezeigt), das folgende Schritte aufweist:
a) Vorsehen eines Bowdenzugs mit einer Bowdenzughülle und einer Seele, die in der Bowdenzughülle zur Übertragung einer Verstellkraft beweglich geführt ist; und
b) Anbringen einer einstückigen Abdichtung derart, dass die Abdichtung in einem ersten Bereich ein Ende der Bowdenzughülle umschließt, und sich in einem zweiten Bereich über einen aus der Bowdenzughülle austretenden Bereich der Seele erstreckt und an der Seele abdichtend anliegt; wobei die Abdichtung ausgebildet ist, um in aufgenommenem Zustand in dem ersten Bereich von einem Endstück an die Bowdenzughülle angedrückt zu werden;
wobei vorzugsweise vorgesehen ist:
c) Einführen des Endes der Bowdenzughülle in eine Aufnahme eines Endstücks, das eine Öffnung aufweist, aus dem die Seele austritt; wobei die Abdichtung zwischen der Bowdenzughülle und der inneren Wandung der Aufnahme angeordnet wird und sich die Abdichtung vorzugsweise bis in die Öffnung erstreckt.

In einem weiteren Beispiel ist vorgesehen, dass in Schritt a) die Seele mit wenigstens einem Seelenendstück, vorzugsweise mit zwei Seelenendstücken, durch die Öffnung eines Endstücks geführt wird, wobei die Seele bereits in der Bowdenzughülle angeordnet ist; und in Schritt b) die Abdichtung in die Aufnahme des Endstücks eingesetzt wird; und in Schritt c) die Bowdenzughülle und die Abdichtung in die Aufnahme eingeführt werden.

In einem weiteren Beispiel ist vorgesehen, dass in Schritt b) die Abdichtung auf die Bowdenzughülle aufgeschoben wird, wobei die Seele, die wenigstens an einem Ende ein Seelenendstück aufweist, vorzugsweise an jedem Ende ein Seelenendstück, bereits in der Bowdenzughülle verläuft; und in Schritt c) wird die Seele nach dem Aufsetzen der Abdichtung mit einem Seelenendstück durch die Öffnung des Endstücks geschoben; und dann oder auch gleichzeitig wird die Bowdenzughülle mit der auf dem Ende aufgesetzten Abdichtung in die Aufnahme des Endstücks eingeführt.

Die oberhalb beschriebenen Ausführungsbeispiele können in unterschiedlicher Art und Weise kombiniert werden. Insbesondere können auch Aspekte der Vorrichtungen für die Ausführungsformen des Verfahrens verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ein Kraftfahrzeug-Verstellmodul (10) zur Betätigung einer verstellbaren Fahrzeugkomponente, das Kraftfahrzeug-Verstellmodul aufweisend:
- ein Verstellelement; und
- einen Bowdenzug (12) mit einer Bowdenzughülle (14) und einer Seele (16), die in der Bowdenzughülle zur Übertragung einer Verstellkraft beweglich geführt ist;
wobei die Seele an einem ersten Ende mit dem Verstellelement verbunden ist;
wobei die Bowdenzughülle wenigstens an einem ersten Ende (18) in einem Endstück aufnehmbar ist; und
wobei eine einstückige Abdichtung (20) vorgesehen ist, die in einem ersten Bereich (22) das erste Ende der Bowdenzughülle umschließt, und die sich in einem zweiten Bereich (24) über einen aus der Bowdenzughülle austretenden Bereich der Seele erstreckt und an der Seele abdichtend anliegt; und wobei die Abdichtung ausgebildet ist, um in einem in einem Endstück aufgenommenen Zustand in dem ersten Bereich von einem Endstück an die Bowdenzughülle angedrückt zu werden.

2. Kraftfahrzeug-Verstellmodul nach Anspruch 1, wobei die Abdichtung ausgebildet ist, um sich in dem aufgenommenen Zustand in dem zweiten Bereich wenigstens bis in eine Öffnung des Endstücks zu erstrecken, aus der die Seele austritt, und vorzugsweise von dem Öffnungsrand gegen die Seele gedrückt zu werden.

3. Kraftfahrzeug-Verstellmodul nach Anspruch 1 oder 2, wobei ein Endstück (26) vorgesehen ist mit:
- einer Aufnahme (28) für das wenigstens eine Ende der Bowdenzughülle, um die Bowdenzughülle in Längsrichtung abzustützen; und
- einer Öffnung (30), aus der die Seele austritt;
wobei die Abdichtung in dem ersten Bereich von der Aufnahme an die Bowdenzughülle angedrückt ist; und
wobei sich die Abdichtung vorzugsweise bis in die Öffnung erstreckt.

4. Kraftfahrzeug-Verstellmodul nach einem der vorhergehenden Ansprüche, wobei die Abdichtung in dem ersten Bereich an der Außenseite der Bowdenzughülle abdichtend anliegt und in dem zweiten Bereich an der Außenseite der Seele abdichtend anliegt; wobei zwischen dem ersten Bereich und dem zweiten Bereich ein Übergangsbereich (32) vorgesehen ist, der an dem Ende der Bowdenzughülle zusammen mit dem ersten und dem zweiten Bereich eine wirksame Abdichtung des Inneren des Bowdenzugs bildet.

5. Kraftfahrzeug-Verstellmodul nach einem der vorhergehenden Ansprüche, wobei das Endstück mit der Bowdenzughülle mechanisch fest verbunden ist.

6. Kraftfahrzeug-Verstellmodul einem der vorhergehenden Ansprüche, wobei das Endstück an einem Gehäuse eines Verstellelements vorgesehen ist.

7. Eine Kraftfahrzeug-Verstellanordnung, aufweisend:
- ein Betätigungselement zum Erzeugen einer Verstellkraft; und
- ein Kraftfahrzeug-Verstellmodul nach einem der vorhergehenden Ansprüche;
wobei die Seele an einem zweiten Ende mit dem Betätigungselement verbunden ist; und
wobei die Verstellkraft über die Seele auf das Verstellelement aufgebracht ist.

8. Verfahren zur Herstellung einer Abdichtung eines Kraftfahrzeug-Verstellmoduls, wobei das Verfahren folgende Schritte aufweist:
a) Vorsehen eines Bowdenzugs mit einer Bowdenzughülle und einer Seele, die in der Bowdenzughülle zur Übertragung einer Verstellkraft beweglich geführt ist; und
b) Anbringen einer einstückigen Abdichtung derart, dass die Abdichtung in einem ersten Bereich ein Ende der Bowdenzughülle umschließt, und sich in einem zweiten Bereich über einen aus der Bowdenzughülle austretenden Bereich der Seele erstreckt und an der Seele abdichtend anliegt; wobei die Abdichtung ausgebildet ist, um in aufgenommenem Zustand in dem ersten Bereich von einem Endstück an die Bowdenzughülle angedrückt zu werden;
wobei vorzugsweise vorgesehen ist:
c) Einführen des Endes der Bowdenzughülle in eine Aufnahme eines Endstücks, das eine Öffnung aufweist, aus dem die Seele austritt; wobei die Abdichtung zwischen der Bowdenzughülle und der inneren Wandung der Aufnahme angeordnet wird und sich die Abdichtung vorzugsweise bis in die Öffnung erstreckt.

9. Verfahren nach Anspruch 8, wobei vorgesehen ist, dass
- in Schritt a) die Seele mit wenigstens einem Seelenendstück, vorzugsweise mit zwei Seelenendstücken, durch die Öffnung eines Endstücks geführt wird, wobei die Seele bereits in der Bowdenzughülle angeordnet ist;
- in Schritt b) die Abdichtung in die Aufnahme des Endstücks eingesetzt wird; und
- in Schritt c) die Bowdenzughülle und die Abdichtung in die Aufnahme eingeführt werden.

10. Verfahren nach Anspruch 8, wobei vorgesehen ist, dass
- in Schritt b) die Abdichtung auf die Bowdenzughülle aufgeschoben wird, wobei die Seele, die wenigstens an einem Ende ein Seelenendstück aufweist, vorzugsweise an jedem Ende ein Seelenendstück, bereits in der Bowdenzughülle verläuft;
- in Schritt c) die Seele nach dem Aufsetzen der Abdichtung mit einem Seelenendstück durch die Öffnung des Endstücks geschoben wird; und dann oder auch gleichzeitig die Bowdenzughülle mit der auf dem Ende aufgesetzten Abdichtung in die Aufnahme des Endstücks eingeführt wird.
